# EUROPEAN PATENT APPLICATION

(11) **EP 4 650 960 A1**
(43) Date of publication of application: **19.11.2025**
(21) Application number: 24901772.4
(22) Date of filing: 30.05.2024
(51) Int. Cl.: G06F 9/48

(54) **THREAD SCHEDULING METHOD AND APPARATUS, PROCESSOR, AND COMPUTER-READABLE STORAGE MEDIUM**

(30) Priority: 20.03.2024 CN 202410322880
(71) Applicant: Hygon Information Technology Co., Ltd., Tianjin 300392 (CN)
(72) Inventor: XUE, Liang, Binhai New Area, Tianjin 300392 (CN)
(74) Representative: Regimbeau
(86) International application number: PCT/CN2024/096253
(87) International publication number: WO 2025/194590

(57) **Abstract**

Embodiments of the present disclosure provide a method and an apparatus for thread scheduling, a processor, and a computer-readable storage medium. The method for thread scheduling includes: acquiring a plurality of threads to be scheduled for object resources in a processor, and acquiring an occupancy quantity and a reservation quantity of the object resources for the plurality of the threads respectively and currently; and selecting a target thread satisfying a scheduling condition from the plurality of the threads for scheduling based on the occupancy quantity and the reservation quantity of the object resources for the plurality of the threads respectively and currently. The method and apparatus for thread scheduling, under the premise of ensuring the fairness of the plurality of threads, will not cause a certain thread starved, and improve the robustness of the overall design.

## Description

The present application claims priority of the Chinese Patent Application No. 202410322880.8, filed on March 20, 2024, the disclosure of which is incorporated herein by reference in its entirety as part of the present application.

### TECHNICAL FIELD

Embodiments of the present disclosure relate to a method and apparatus for thread scheduling, a processor and a computer-readable storage medium.

### BACKGROUND

Modern multi-launch high-performance CPUs (Central Processor) include at least one processor core, each processor core includes multiple execution units to execute instructions. For example, the pipeline process of instruction execution includes five stages: Instruction fetch (IF), Instruction Dispatch/Decode (ID), Execution (EX), Memory (MEM), and Write Back (WB, updating the result obtained by completing the instruction execution into a register).

In order to improve the parallelism of instruction execution in the processor, the processor can the adopt simultaneous multi-threading (SMT) technology, so that the pipeline structure for instruction execution in the processor (also referred to as "pipeline") can support the simultaneous execution of two or more (hardware) threads. For example, the SMT processor may be SMT2 (supporting up to two concurrent threads), SMT4 (supporting up to four concurrent threads) or SMT8 (supporting up to eight concurrent threads). When a single-threading processor is running, a plurality of execution units in the processor may be idle due to pause reasons such as cache misses. For a processor using SMT technology, even one thread is paused, other threads can also continue to use these hardware resources, which improves the utilization rate of hardware resources, avoids idling, and improves the processor throughput and performance-power ratio.

However, with the increase of the quantity of threads in SMT processors, the competition for shared resources between threads is more intense, and the resource competition will lead to the weakening of parallelism of multiple threads, and reduce the performance and resource utilization of processors. Therefore, how to alleviate the resource competition between threads and improve parallelism has become an important research direction of simultaneous multi-threading processors.

### SUMMARY

At least one embodiment of the present disclosure provides a method for thread scheduling, and the method includes: acquiring a plurality of threads to be scheduled for object resources in a processor, and acquiring an occupancy quantity and a reservation quantity of the object resources for the plurality of the threads respectively and currently; and selecting a target thread satisfying a scheduling condition from the plurality of threads for scheduling based on the occupancy quantity and the reservation quantity of the object resources for the plurality of the threads respectively and currently.

For example, in the method for thread scheduling according to at least one embodiment, the scheduling condition includes that the target thread is currently active, and the object resources have a first quantity of object resources available for allocation except a quantity of object resources reserved for other active threads other than the target thread.

For example, in the method for thread scheduling according to at least one embodiment, selecting a target thread satisfying a scheduling condition from the plurality of threads for scheduling includes arbitrating based on a selection algorithm to select the target thread from one or more candidate threads that satisfy the scheduling condition.

For example, in the method for thread scheduling according to at least one embodiment, the selection algorithm includes a least recently used (LRU) algorithm, a least frequently used (LFU) algorithm, or a robin hood (RH) algorithm.

For example, in the method for thread scheduling according to at least one embodiment, the selecting a target thread satisfying a scheduling condition from the plurality of threads for scheduling, includes: acquiring target instructions to be sent by the target thread and a second quantity of the target instructions, and acquiring a first quantity of object resources available for allocation except a quantity of object resources reserved for other active threads other than the target thread, in which the first quantity is greater than zero; and in response to the second quantity being less than or equal to the first quantity, sending all of the target instructions to use the object resources for instruction processing, or, in response to the second quantity being greater than the first quantity, sending partial instructions having the first quantity among the target instructions to use the object resources for instruction processing.

For example, in the method for thread scheduling according to at least one embodiment, before acquiring an occupancy quantity and a reservation quantity of the object resources for the plurality of the threads respectively and currently, the method further includes: determining the reservation quantity of the object resources for each thread of the plurality of the threads.

For example, in the method for thread scheduling according to at least one embodiment, the determining the reservation quantity of the object resources for each thread of the plurality of the threads includes: for a current thread in the plurality of threads, determining whether the current thread is active; in response to the current thread being inactive, reserving no object resource for the current thread; or, in response to the current thread being active, determining a reservation quantity of the object resources for the current thread based on an occupancy quantity of the object resources for the current thread.

For example, in the method for thread scheduling according to at least one embodiment, a quantity of the plurality of threads is greater than or equal to 4.

For example, in the method for thread scheduling according to at least one embodiment, the object resources include a cache, a storage space of a branch predictor, a storage space of an out-of-order scheduler and a storage space of a data prefetcher.

At least one embodiment of the present disclosure also provides an apparatus for thread scheduling, which includes an acquiring module and a scheduling module. The acquiring module is configured to acquire a plurality of threads to be scheduled for object resources in a processor, and acquire an occupancy quantity and a reservation quantity of the object resources for the plurality of the threads respectively and currently. The scheduling module is configured to select a target thread satisfying a scheduling condition from the plurality of threads for scheduling based on the occupancy quantity and the reservation quantity of the object resources for the plurality of the threads respectively and currently.

For example, in the apparatus for thread scheduling according to at least one embodiment, the scheduling module includes a thread selecting module, which is configured to arbitrate based on a selection algorithm to select the target thread from one or more candidate threads that satisfy the scheduling condition.

For example, in the apparatus for thread scheduling according to at least one embodiment, the scheduling module further includes an instruction selecting module, which is configured to acquire target instructions to be sent by the target thread and a second quantity of the target instructions, and acquire a first quantity of object resources available for allocation except a quantity of the object resources reserved for other active threads other than the target thread, in which the first quantity is greater than zero; and in response to the second quantity being less than or equal to the first quantity, send all of the target instructions to use the object resources for instruction processing, or, in response to the second quantity being greater than the first quantity, send partial instructions having the first quantity among the target instructions to use the object resources for instruction processing.

For example, the apparatus for thread scheduling according to at least one embodiment further includes a resource reservation module, and the resource reservation module is configured to determine the reservation quantity of the object resources for each thread of the plurality of the threads.

At least one embodiment of the present disclosure further provides an apparatus for thread scheduling, which includes a processor and a memory. The memory stores computer-readable instructions and is communicatively connected with the processor. The processor executes the computer-readable instructions stored in the memory to implement the method for thread scheduling provided in any one of the above embodiments.

At least one embodiment of the present disclosure further provides a processor, which includes the apparatus for thread scheduling provided in at least one embodiment of the present disclosure.

At least one embodiment of the present disclosure further provides a computer-readable storage medium. The computer-readable storage medium stores computer-readable instructions, and when a processor executes the computer-readable instructions, the processor implements the method for thread scheduling provided by any of the above embodiments.

### BRIEF DESCRIPTION OF DRAWINGS

To more clearly illustrate the technical scheme of the embodiments of the present disclosure, the drawings required to be used in the embodiments will be briefly described below. Obviously, the drawings in the following description only relate to some embodiments of the present disclosure and are not limited to the present disclosure.
Fig. 1 illustrates a schematic diagram of a pipeline of a processor core;
Fig. 2 illustrates a schematic diagram of a processor pipeline involving out-of-order execution and register rename;
Fig. 3 illustrates a schematic diagram of a thread scheduling process for an SMT4 processor;
Fig. 4 illustrates a schematic flow diagram of a method for thread scheduling provided by at least one embodiment of the present disclosure;
Fig. 5 illustrates a structural schematic diagram of an apparatus for thread scheduling provided by at least one embodiment of the present disclosure;
Fig. 6 illustrates a structural schematic diagram of another apparatus for thread scheduling provided by at least one embodiment of the present disclosure;
Fig. 7 illustrates a structural schematic diagram of another apparatus for thread scheduling provided by at least one embodiment of the present disclosure;
Fig. 8 illustrates a schematic diagram of a computer-readable storage medium provided by at least one embodiment of the present disclosure;
Fig. 9 illustrates a schematic block diagram of an electronic device provided by at least one embodiment of the present disclosure.

### DETAILED DESCRIPTION

In order to make the objects, technical scheme, and advantages of the embodiments of the present disclosure clearer, the technical scheme of the embodiments of the present disclosure will be described clearly and completely in the following in conjunction with the drawings in the embodiments of the present disclosure. Obviously, the described embodiments are a part of the embodiments of the present disclosure and not all of the embodiments. Based on the described embodiments of the present disclosure, all other embodiments obtained by a person skilled in the art without making creative works belong to the scope of protection of the present disclosure.

Unless otherwise defined, technical or scientific terms used in this disclosure shall have the ordinary meaning understood by a person skilled in the art to which this disclosure pertains. The terms "first," "second," and the like, as used in this disclosure, do not indicate any order, quantity, or importance, but are used only to distinguish between different components. The words "including" or "comprising" and the like are intended to mean that the component or object preceded by the word encompasses the components or objects listed after the word and their equivalents, and does not exclude other components or objects. Words such as "connected" or "linked" are not limited to physical or mechanical connections, but may include electrical connections, whether direct or indirect. The words "up", "down", "left", "right" and the like are used only to indicate relative positional relationships. When the absolute position of the described object is changed, the relative positional relationship may be changed accordingly.

To improve the performance of a processor core, the processor core may use the pipelining approach, that is, an entire process of an instruction being fetched, decoded, executed and written back is divided into a plurality of pipelined stages. An instruction in an operation cycle can only be in one of the pipeline stages, while a processor core can run a plurality of instructions in different pipeline stages.

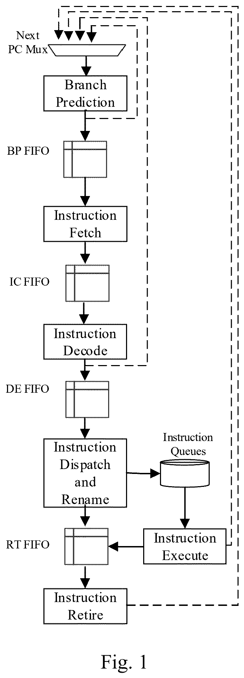

Fig. 1 illustrates a schematic diagram of a pipeline of a processor core, where the dashed lines with arrows indicate a redirected instruction stream.

As shown in Fig. 1, a processor core (e.g., a CPU core) of a single-core processor or a multi-core processor improves instruction level parallelism by using a pipelining technique. The pipeline within a processor core includes a plurality of pipeline stages, for example, after program counters from various sources is fed into the pipeline and the next program counter (PC) is selected by a multiplexer (Mux), the instruction corresponding to the program counter goes through branch prediction, instruction fetch, instruction decode, instruction dispatch and rename, instruction execution, instruction retire, etc. Waiting queues are set up between pipeline stages as needed, and these queues are usually first-in-first-out (FIFO) queues. For example, after the branch prediction unit, a branch prediction (BP) FIFO queue is set up to store the branch prediction results; after the instruction fetch unit, an instruction cache (IC) FIFO is set up to cache the acquired instructions; after the instruction decode unit, a decoding (DE) FIFO is set up to cache the decoded instructions; after the instruction dispatch and rename unit, a runtime (RT) FIFO is set up to cache instructions waiting for confirmation of the end of execution. The pipeline of the processor core also includes an instruction queue to cache instructions waiting for the instruction execution unit to execute the instruction after the instruction dispatch and rename.

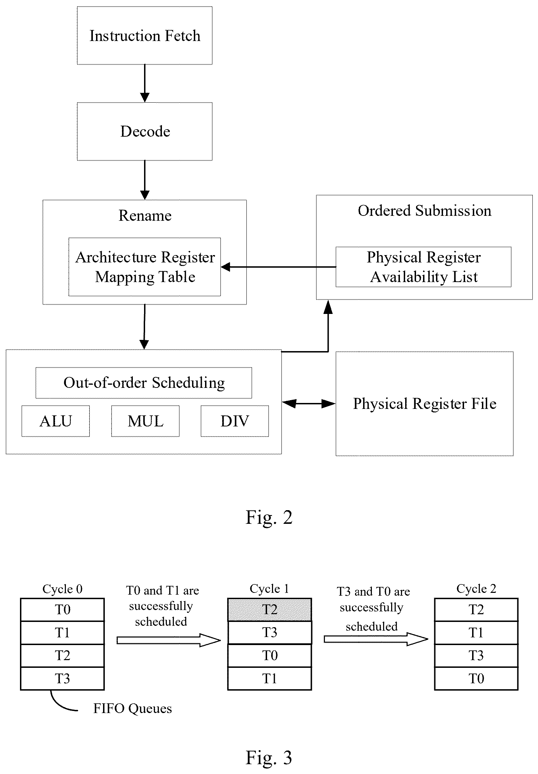

Fig. 2 illustrates a schematic diagram of a processor pipeline involving out-of-order execution and register rename. As shown in Fig. 2, after each instruction (e.g., a branch instruction) in the processor is fetched from an instruction cache according to a program counter (PC) ("instruction fetch"), the instruction decoding ("decode") is performed on the fetched instruction; a register renaming operation ("rename") is performed on the decoded instruction, the instruction after register rename are sent for out-of-order execution to remove pseudo-correlation between instructions; after that, the instruction enters an instruction allocation module, which decides when to allocate the instruction to what execution unit for execution ("out-of-order scheduling"), for example, in different operation cycles, the instruction will be allocated to different execution units (e.g., arithmetic logic unit (ALU), multiplication unit (MUL), division unit (DIV), load and store unit (LSU), etc.) corresponding to different ports (e.g., Port 0, Port 1, Port 2, Port 3, etc.) for execution. While register rename is performed, the instruction enters an instruction submission unit, and the instruction submission unit records the original fetch order of the instructions processed in the pipeline. The instruction submission unit is used to submit the instruction in the original fetch order after the instruction execution is completed, and simultaneously the instruction submission unit will update the branch prediction unit with the actual execution information of the branch instruction.

As mentioned above, possible pipeline conflicts between WAW (write-after-write) and WAR (write-after-read) can be resolved by the register rename technique. This technique does not increase the quantity of general-purpose registers, but redefines the physical registers (PRs) within the processor. The register defined in an instruction set is called architectural registers (ARs). The physical register physically exists in the processor, and are for example called a physical register file (PRF). The processor dynamically maps the architectural register (AR) to the physical register (PR) to resolve WAW and WAR correlation problem. The processor accomplishes the process of register rename through an architectural register mapping table and a physical register availability list. When a processor performs the register rename on an architecture register used in a current instruction, the processor needs to process both the source register and destination register (both logical registers) in the current instruction. For the source register, the processor looks up the architecture register mapping table to find the corresponding PR number (PRN), and for the destination register, the processor needs to read a PR number from the physical register availability list, establish a mapping relationship between the PR number and the destination register and write the mapping relationship into the architecture register mapping table. When an idle list is empty, the processor pipeline needs to be paused and wait until an instruction retires to release the PR. The architecture register mapping table is implemented, for example, by a hardware structure such as a storage apparatus (e.g., a cache or a register).

In addition, to increase the parallelism of instruction execution in a processor, the processor may also adopt simultaneous multi-threading (SMT) techniques. The pipeline structure (also referred to as "pipeline") of the processor for instruction execution may support the simultaneous execution of two or more (hardware) threads, for example, it may be SMT2 (which supports up to two concurrent threads), SMT4 (supporting up to four concurrent threads), or SMT8 (supporting up to eight concurrent threads). In the pipeline of a processor that supports simultaneous multi-threading techniques, computational resources in the processor are shared by a plurality of threads. For example, each thread may have its own independent logical registers, but multiple physical registers within the processor are shared by the plurality of threads. For the queues having various controlling functions in the pipeline, some queues may be shared by the plurality of threads, such as the instruction scheduling queue, while other queues may be statically divided between the plurality of threads, such as the instruction reordering queue. Simultaneous multi-threading techniques can utilize inter-thread parallelism to improve pipeline resource utilization.

In addition, processors using simultaneous multi-threading (SMT) techniques can work in SMT mode, or can also work in single-threading mode. For example, in the SMT mode, when a thread encounters a wait state, the other threads can continue execution, which can effectively improve hardware resource utilization rate, and thus enhance the multi-threading processing capability, overall performance and performance-to-power ratio of the CPU core.

In the present disclosure, an "operation cycle" may be, for example, a clock cycle or a machine cycle, or may also be other time period in the instruction pipeline of the processor for completing a one-burst operation. The execution process of an instruction in each thread includes several phases, and a basic operation (e.g., fetch instruction, memory read, memory write, etc.) is completed at each stage, and the time required for completing a basic operation is called a machine cycle, or also called a CPU cycle.

Fig. 3 illustrates a schematic diagram of a thread scheduling process for an SMT4 processor. The SMT4 processor can schedule 2 threads in each operation cycle, which is taken as an example. As shown in Fig. 3, for the scheduling of a queue that is shared by a plurality of threads in a certain pipeline stage, the thread numbers T0-T3 of four threads are stored in a first-in-first-out (FIFO) queue, and from the head to the tail of the FIFO queue, the priorities of the four threads are arranged from highest to lowest. In the operation cycle 0, the thread priority order stored in the initial state of the FIFO queue is T0, T1, T2 and T3, and all the four threads are in a schedulable state. After the threads T0 and T1 are successfully scheduled, the state of the FIFO queue is updated to T2, T3, T0, and T1. In the operation cycle 1, the thread priority order is T2, T3, T0 and T1, because the thread T2 is in a non-schedulable state (in the Fig. 2, the gray box indicates that the thread is in the non-schedulable state), then the schedulable threads are threads T3, T0 and T1. When the threads T3 and T0 are scheduled successfully, the state of the FIFO queue is updated to T2, T1, T3 and T0. The subsequent process of thread scheduling is similar, and will not be repeated here.

For a simultaneous multi-threading processor (hereafter also referred to as a SMT processor), when the schedulable shared resources satisfy the demands of all the threads to be scheduled (e.g., the thread T0 and thread T1), then the threads to be scheduled may execute the scheduling at the same time; otherwise, there is a conflict of resources between the threads to be scheduled, and shared resource arbitration is required to determine a target thread for scheduling.

For example, resources shared by a plurality of threads in the SMT processor include but are not limited to, a cache (e.g., a first level data cache, a first level instruction cache, a second level cache, etc.), a storage space of a branch predictor, a storage space of an out-of-order scheduler for register rename, a storage space of a data prefetcher, etc.

The inventor of the present disclosure notes that the control of the shared resource (e.g., the storage space of an out-of-order scheduler), for example, used for the plurality of threads in existing SMT processors, is designed based on a simultaneous two-threading. In a two-threading scenario, when each thread competes for a shared resource, each thread only needs to ensure that it does not exhaust the shared resource, which can ensure that the other thread still has the resource available and does not cause the other thread starved. However, for a processor having more threads (e.g., four or more threads), when each thread only considers that it will not exhaust the shared resources in the processor pipeline, since each thread does not know the resource usage situation of the other three threads, three threads will likely exhaust the shared resources together, resulting in no resources available for the remaining thread and resulting in a bug or hang.

At least one embodiment of the present disclosure provides a method and an apparatus for thread scheduling, a processor and a computer-readable storage medium.

The method for thread scheduling includes: acquiring a plurality of threads to be scheduled for object resources in a processor, acquiring an occupancy quantity and a reservation quantity of the object resources for the plurality of the threads respectively and currently; and selecting a target thread satisfying a scheduling condition from the plurality of the threads for scheduling based on the occupancy quantity and the reservation quantity of the object resources for the plurality of the threads respectively and currently.

The apparatus for thread scheduling includes an acquiring module and a scheduling module. The acquiring module is configured to acquire a plurality of threads to be scheduled for object resources in a processor, and acquire an occupancy quantity and a reservation quantity of the object resources for the plurality of the threads respectively and currently. The scheduling module is configured to select a target thread satisfying a scheduling condition from the plurality of threads for scheduling based on the occupancy quantity and the reservation quantity of the object resources for the plurality of the threads respectively and currently.

In at least one embodiment of the present disclosure, for example, in a simultaneous four-threading (SMT4) processor, for the shared resources of a scheduling object ("object resources"), when determining how many resources can be consumed by each thread selected to use a shared resource, in addition to considering the total quantity of resources remaining in the object resources, the quantity of resources that need to be reserved for the other three threads is also considered. Performing thread scheduling is considered when there are remaining shared resources available with a sufficient quantity of resources reserved for other threads, otherwise, it needs to wait. For example, further, before scheduling each thread, whether the object resources are reserved for the thread and how many object resources are reserved for the thread is checked firstly.

The method and apparatus for thread scheduling in the above embodiments of the present disclosure, under the premise of ensuring the fairness of the plurality of threads in a processor, will not cause a certain thread starved, and improve the overall design robustness of the processor.

The disclosed method and apparatus for thread scheduling are described below in a non-limiting manner in connection with one or more specific embodiments.

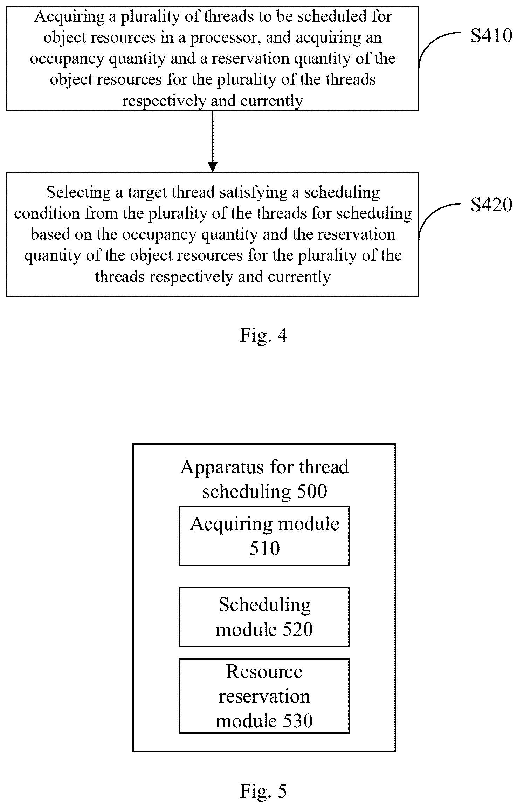

Fig. 4 illustrates a flow diagram of a method for thread scheduling provided by at least one embodiment of the present disclosure, and the method for thread scheduling includes S410-S420.

S410: acquiring a plurality of threads to be scheduled for object resources in a processor, and acquiring an occupancy quantity and a reservation quantity of the object resources for the plurality of the threads respectively and currently.

S420: selecting a target thread satisfying a scheduling condition from the plurality of the threads for scheduling based on the occupancy quantity and the reservation quantity of the object resources for the plurality of the threads respectively and currently.

For example, the processor is an SMT processor (e.g., SMT4, SMT8, etc.), a plurality of instructions that respectively belong to the plurality of threads are running in a pipeline of the processor. For scheduling of resources ("object resources") shared by the plurality of threads in a certain pipeline stage, the occupancy quantity of the object resources for the plurality of the threads and the reservation quantity of the object resources for the plurality of the threads currently are required to be considered respectively. Then, based on the occupancy quantity and the reservation quantity, a target thread satisfying a scheduling condition from the plurality of threads is selected for scheduling.

Here, for the object resources at a certain pipeline stage, the " occupancy quantity" is used to refer to a quantity of object resources that are occupied and have not been released by a certain thread in the current operation cycle. The "reservation quantity" is used to refer to a quantity of object resources that are idle (therefore available for allocation) and reserved by a certain thread for the current operation cycle.

For example, in at least one example, the method for thread scheduling of an embodiment of the present disclosure, before acquiring an occupancy quantity and a reservation quantity of the object resources for the plurality of the threads respectively and currently, further includes: determining the reservation quantity of the object resources for each thread of the plurality of the threads.

For example, in at least one example, the determining the reservation quantity of the object resources for each thread of the plurality of the threads, includes: for a current thread in the plurality of the threads, determining whether the current thread is active; in response to the current thread being inactive, reserving no object resource for the current thread, or, in response to the current thread being active, determining a reservation quantity of the object resources for the current thread based on an occupancy quantity of the object resources for the current thread.

For example, taking an SMT4 processor and a storage space of an out-of-order scheduler as an example, the four threads being processed are threads T0~T3, the reservation quantity of the object resources for each thread of the threads T0~T3 is determined before scheduling in the current operation cycle, for example, a reservation rule is as follows:
in response to a thread being inactive, no resources are reserved for the thread;
in response to a thread being active and having already occupied 0 resource in the storage space of an out-of-order scheduler, 2 storage resources are reserved for the thread;
in response to a thread being active and having already occupied 1 resource in the storage space of an out-of-order scheduler, 1 storage resource is reserved for the thread; and
in response to a thread being active and having already occupied at least two 2 resources in the storage space of an out-of-order scheduler, no resource needs to be reserved for the thread.

For example, the reservation rule is fixed during the working process of the processor, or may be changed according to the situation during the working process of the processor. For example, a register may be used to store the reservation rule, and the reservation rule can also be modified and adjusted accordingly.

In one example, assuming that the total quantity of resources in the storage space of an out-of-order scheduler is 10 (e.g., 10 storage entries), before the current operation, the occupancy quantity and the reservation quantity of resources in the storage space of the out-of-order scheduler by threads T0-T3 are as follows.

Thread T0: having occupied 0; reserved 2.

Thread T1: having occupied 1; reserved 1.

Thread T2: having occupied 3; reserved 0.

Thread T3: having occupied 0; reserved 2.

At this moment, in the storage space of an out-of-order scheduler, the quantity of resources that have been occupied is 4, the quantity of resources that are reserved is 5, and the quantity of resources that have not been occupied and are not reserved is 1.

For example, in at least one example, the scheduling condition includes: the target thread is currently active, and the object resources, except a quantity of the object resources that have been reserved for other active threads other than the target thread, have the first quantity of object resources available for allocation.

Here, "active" is used to refer to a thread that is not hung, paused or aborted by a system, and the corresponding instruction pipeline is in a state of continuous execution, and therefore is also in a schedulable state.

For example, when thread scheduling is performed in the current operation cycle, the first condition is to select candidate threads from the active threads, i.e., inactive threads will be excluded from the candidate threads; secondly, it is also required that the current object resources, except a quantity of the object resources reserved for other active threads other than the target thread, have idle resources available for allocation. The idle resources available for allocation include the resources reserved for the target thread and any unreserved idle resources. Conversely, for a thread, when the resources reserved for the thread and any unreserved idle resources are both 0, the thread will not be used as a candidate thread.

It is assumed that in the above example, threads T0-T3 are all active except thread T2 in the current operation cycle, that is, only the thread T2 is inactive, so the threads T0, T1 and T3 may all be selected for scheduling. On the other hand, it is assumed that the threads T0-T3 all require 3 resources in the current cycle, therefore, assuming that the threads T0 T1 and T3 are all scheduled, there can also be at least one idle resource available. At this moment, the threads T0, T1 and T3 can all be used as candidate threads.

For example, in at least one example, selecting a target thread satisfying a scheduling condition from the plurality of the threads for scheduling includes: arbitrating based on a selection algorithm to select the target thread from one or more candidate threads that satisfy the scheduling condition.

On the other hand, the relationship between threads and the operation history are also required to be considered, for example, to achieve fair scheduling from a plurality of threads, the plurality of threads may be arbitrated based on the selection algorithm, so as to select the target thread from all the candidate threads that satisfy the scheduling condition.

For example, in at least one example, the selection algorithm includes a least recently used (LRU) algorithm, a least frequently used (LFU) algorithm or a Robin Hood (RH) algorithm.

For example, for the above scenario where the threads T0, T1 and T3 are all used as candidate threads, it is assumed that from the threads T0, T1 and T3, the number of times threads T0, T1 and T3 have been scheduled in a previous period of time is T3, T0 and T1 respectively, in descending order. Thus, in the example where the LRU algorithm is used, the least previously scheduled thread T1 will be selected from the threads T0, T1 and T3 as the target thread for scheduling.

For example, in at least one example, selecting a target thread from the plurality of threads for scheduling that satisfies the scheduling conditions includes: acquiring target instructions to be sent by the target thread and a second quantity of the target instructions, and acquiring a first quantity of object resources available for allocation except a quantity of object resources reserved for other active threads other than the target thread, in which the first quantity is greater than zero; and in response to the second quantity being less than or equal to the first quantity, sending all of the target instructions to use the object resources for instruction processing, or, in response to the second quantity being greater than the first quantity, sending partial instructions having the first quantity among the target instructions to use the object resources for instruction processing.

In the above example of selecting the thread T1 as the target thread for scheduling, the quantity of resources required by the thread T1 is 3 (e.g., 3 instructions require register rename operations), the reservation quantity of resources for the thread T1 is 1, and the quantity of resources that are non-reserved and idle is 1, i.e., the quantity of resources currently required by thread T1 (3) is more than the quantity of resources available for the thread T1 (2), thus from the 3 instructions of the thread T1 that require a register rename operation, two instruction among can be selected to be sent to the storage space of an out-of-order scheduler for the register rename operation, and the remaining 1 instruction is left for consideration in the next operation cycle.

For example, in at least one example, the quantity of the plurality of threads is greater than or equal to 4, for example, the quantity may be 4, 6, 8, etc., that is, the corresponding processor is SMT4, SMT6, SMT8, etc.

For example, in at least one example, the object resources include a cache, a storage space of a branch predictor, a storage space of an out-of-order scheduler, a storage space of a data prefetcher, etc.

Fig. 5 illustrates a structural schematic diagram of an apparatus for thread scheduling provided by at least one embodiment of the present disclosure.

As shown in Fig. 5, the apparatus for thread scheduling 500 includes an acquiring module 510 and a scheduling module 520. The acquiring module 510 is configured to acquire a plurality of threads to be scheduled for object resources in a processor, and acquire an occupancy quantity and a reservation quantity of the object resources for the plurality of the threads respectively and currently. The scheduling module 520 is configured to select a target thread satisfying a scheduling condition from the plurality of threads for scheduling based on the occupancy quantity and the reservation quantity of the object resources for the plurality of the threads respectively and currently.

For example, in at least one embodiment, the scheduling condition includes that the target thread is currently active, and the object resources have the first quantity of object resources available for allocation except a quantity of the object resources reserved for other active threads other than the target thread.

For example, in at least one embodiment, the scheduling module includes a thread selecting module, which is configured to arbitrate based on a selection algorithm to select the target thread from one or more candidate threads that satisfy the scheduling condition.

For example, in at least one embodiment, the selection algorithm includes a least recently used (LRU) algorithm, a least frequently used (LFU) algorithm or a Robin Hood (RH) algorithm.

For example, in at least one embodiment, the scheduling module further includes an instruction selecting module, which is configured to acquire target instructions to be sent by the target thread and the second quantity of the target instructions, and acquire the first quantity of the object resources available for allocation except a quantity of the object resources reserved for other active threads other than the target thread, in which the first quantity is greater than zero; and in response to the second quantity being less than or equal to the first quantity, send all of the target instructions to use the object resources for instruction processing, or, in response to the second quantity being greater than the first quantity, send partial instructions having the first quantity among the target instructions to use the object resources for instruction processing.

Again, as shown in Fig. 5, for example, in at least one embodiment, the apparatus for thread scheduling further includes a resource reservation module 530, which is configured to determine the reservation quantity of the object resources for each thread of the plurality of the threads.

For example, in at least one embodiment, the resource reservation module 530 is further configured to: for a current thread of the plurality of threads, determine whether the current thread is active; in response to the current thread being inactive, reserve no object resource for the current thread, or, in response to the current thread being active, determine a reservation quantity of the object resources for the current thread based on an occupancy quantity of the object resources for the current thread.

For example, in at least one embodiment, a quantity of the plurality of the threads is greater than or equal to 4, such as 4, 6, 8, etc.

For example, in at least one embodiment, the above object resources may include a cache, a storage space of a branch predictor, a storage space of an out-of-order scheduler, a storage space of a data prefetcher, etc., and the embodiments of the present disclosure are not limited thereto.

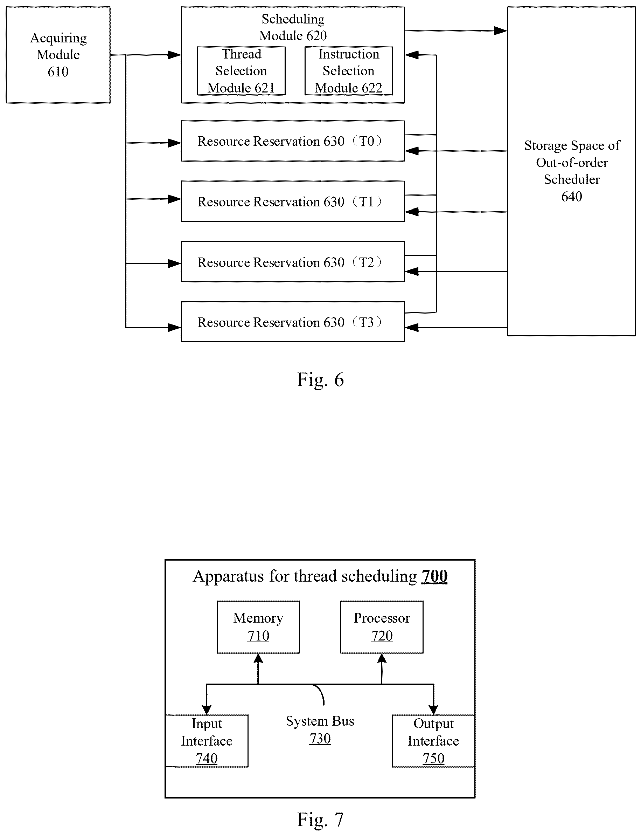

Fig. 6 illustrates a structural schematic diagram of another apparatus for thread scheduling provided by at least one embodiment of the present disclosure.

The apparatus for thread scheduling 600 is used, for example, for an out-of-order scheduler in an SMT4 processor, and includes an acquiring module 610, a scheduling module 620, four resource reservation modules 630 and a storage space of an out-of-order scheduler 640. The scheduling module 620 includes a thread selecting module 621 and an instruction selecting module 622.

The acquiring module 610 is configured to acquire four threads T0~T3 to be scheduled in the processor for the storage space of an out-of-order scheduler 640, and acquire the current reservation quantity of the storage space of the out-of-order scheduler 640 by the four threads T0~T3 respectively and the current reservation quantity of the storage space of the out-of-order scheduler 640 for the four threads T0~T3 respectively; the scheduling module 620 is configured to select a target thread satisfying a scheduling condition from the four threads T0~T3 for scheduling, based on the reservation quantity the storage space of the out-of-order scheduler 640 by the four threads T0~T3 and the reservation quantity of the storage space of the out-of-order scheduler 640 for the four threads T0~T3 currently.

As shown in Fig. 6, each of the four resource reservation modules 630 is configured to determine a reservation quantity of the storage space of the out-pf-order scheduler 640 for each of the four threads T0~T3. Here, the number of the resource reservation modules 630 corresponds to the number of the threads, and each resource reservation module 630 is used for one thread of the threads, but the embodiments of the present disclosure do not limit this.

The thread selecting module 621 is configured to arbitrate based on a selection algorithm to select the target thread from all one or more candidate threads that satisfy the scheduling condition. In this embodiment, the selection algorithm employed is the RLU algorithm; the instruction selecting module 622 is configured to acquire target instructions to be sent by the target thread and the second quantity of the target instructions, and acquire the first quantity of the object resources available for allocation except a quantity of object resources reserved for other active threads other than the target thread, in which the first quantity is greater than zero; and in response to the second quantity being less than or equal to the first quantity, send all of the target instructions to use the object resources for instruction processing, or, in response to the second quantity being greater than the first quantity, send partial instructions having the first quantity among the target instructions to use the object resources for instruction processing.

Fig. 7 illustrates a structural schematic diagram of another apparatus for thread scheduling provided by at least one embodiment of the present disclosure.

As shown in Fig. 7, the apparatus for thread scheduling 700 includes a processor 720 and a memory 710. The memory 710 stores computer-readable instructions and is communicatively connected with the processor 720. The processor 720 executes the computer-readable instructions stored in the memory 710 to implement the method for thread scheduling provided by any embodiment of the present disclosure.

For example, the memory 710 and the processor 720 may communicate with each other directly or indirectly. For example, in some examples, as shown in Fig. 7, the apparatus for thread scheduling 700 may also include a system bus 730, and the memory 710 and the processor 720 may communicate with each other via the system bus 730. For example, the processor 720 may access the memory 710 via the system bus 730. For example, in other examples, the components such as the memory 710 and the processor 720 may communicate via a Network-On-Chip (NOC) connection.

For example, the processor 720 may control other components in the apparatus for thread scheduling to perform desired functions. The processor 720 may be an apparatus with data processing and/or program execution capabilities such as a Central Processor (CPU), a Tensor Processor Unit (TPU), a Network Processor (NP), or a Graphics Processor Unit (GPU), a Digital Signal Processor (DSP), an Application-Specific Integrated Circuit (ASIC), a Field-Programmable Gate Array (FPGA), or other programmable logic apparatus, discrete gate or transistor logic apparatus, discrete hardware components, and the like.

For example, the memory 710 may include any combination of one or more computer program products, and the computer program products may include various forms of computer-readable storage media, such as volatile memory and/or non-volatile memory. The volatile memory may, for example, include Random Access Memory (RAM) and/or cache memory, among others. Non-volatile memory may, for example, include Read-Only Memory (ROM), hard disk, Erasable Programmable Read-Only Memory (EPROM), Compact Disc Read-Only Memory (CD-ROM), USB memory, flash memory, and the like.

For example, one or more computer-readable instructions may be stored in the memory 710, and the processor 720 may run the computer-readable instructions to perform various functions. Various applications and various data may also be stored in the computer-readable storage medium, such as instruction processing code and various data used and/or generated by the application programs.

For example, when some of the computer instructions stored in the memory 710 are executed by the processor 720, the processor 720 can execute one or more steps of the method for thread scheduling according to the above-described method.

For example, as shown in Fig. 7, the apparatus for thread scheduling 700 may also include an input interface 740 that allows an external device to communicate with the apparatus for thread scheduling 700. For example, the input interface 740 may be used to receive instructions from an external computer device, a user terminal, etc. The apparatus for thread scheduling 700 may also include an output interface 750 that allows the apparatus for thread scheduling 700 and one or more external devices to interconnect. For example., the apparatus for thread scheduling 700 may pass through the output interface 750, etc.

It is to be noted that the apparatus for thread scheduling provided by the embodiments of the present disclosure is exemplary and not limiting, and the apparatus for thread scheduling may include other conventional components or structures according to the needs of the actual application. For example, to realize the necessary functions of the apparatus for thread scheduling, the person skilled in the art may set up other conventional components or structures according to the specific application scenarios, and the embodiments of the present disclosure do not limit this.

At least one embodiment of the present disclosure further provides a processor, the processor, for example, is an SMT processor. The processor includes the apparatus for thread scheduling provided by any embodiment of the present disclosure. The maximum quantity of threads that the SMT processor can support, for example, may be 2, 4, 8, etc., and the SMT processor may be a single-core or a multi-core processor. For example, the processor core may use a micro-architecture such as X86, ARM, RISC-V, etc., and may include one or more levels of cache, which is not limited by embodiments of the present disclosure.

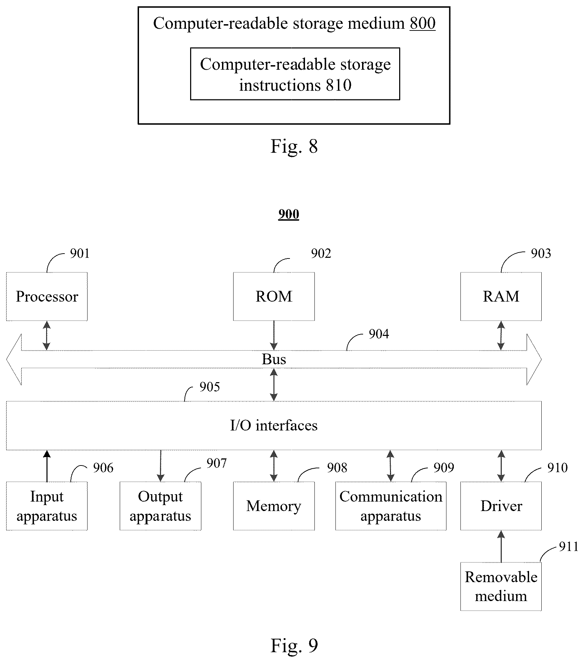

At least one embodiment of the present disclosure also provides a computer-readable storage medium. Fig. 8 is a schematic diagram of a computer-readable storage medium provided by at least one embodiment of the present disclosure.

For example, as shown in Fig. 8, the computer-readable storage medium 800 stores the computer-readable instructions 810, and when the computer-readable instructions 810 are executed by a computer (including a processor), the computer can implement the method for thread scheduling provided by any embodiment of the present disclosure.

For example, one or more computer-readable instructions may be stored on the computer-readable storage medium 800. Some computer-readable instructions stored on the computer-readable storage medium 800 may be, for example, instructions that are used to implement one or more steps of the method for thread scheduling described above.

For example, the computer-readable storage medium may include a storage component of a tablet computer, a hard disk of a personal computer, a random access memory (RAM), a read-only memory (ROM), an erasable programmable read-only memory (EPROM), a compact disc read-only memory (CD-ROM), a flash memory or any combination of the above-described computer-readable storage media, or may also be other applicable storage media. For example, the computer-readable storage medium 800 may include the memory 710 in the apparatus for thread scheduling 700 described above.

At least some embodiments of the present disclosure also provide an electronic device, and the electronic device includes a processor of any embodiment mentioned-above. Fig. 9 is a schematic block diagram of an electronic device provided by at least one embodiment of the present disclosure.

The electronic device in embodiments of the present disclosure may be realized as, but is not limited to, a mobile terminal such as a cell phone, a laptop computer, a digital broadcast receiver, a PDA (personal digital assistant), a PAD (portable android apparatus), a PMP (portable media player), a vehicle-mounted terminal (e.g., a vehicle-mounted navigation terminal), and the like, as well as fixed terminals such as digital TVs, desktop computers, and the like.

The electronic device 900 illustrated in Fig. 9 is merely an example and should not impose any limitation on the functions and scope of use of the embodiments of the present disclosure.

For example, as shown in Fig. 9, in some examples, the electronic device 900 includes a processor 901, which may include a processor of any of the above-described embodiments, which may perform a variety of appropriate actions and processes by a program stored in a read-only memory (ROM) 902 or a program loaded from a memory 908 into a random access memory (RAM) 903. Also stored in the RAM 903 are various programs and data necessary for the operation of the computer system. The processor 901, the ROM 902, and the RAM 903 are connected hereby via the bus 904. The input/output (I/O) interfaces 905 are also connected to the bus 904.

For example, the following components may be connected to the I/O interface 905, which includes: the input apparatus 906 such as a touch screen, a touchpad, a keyboard, a mouse, a camera, a microphone, an accelerometer, a gyroscope, and the like; the output apparatus 907 such as a liquid crystal display (LCD), a loudspeaker, a vibrator, and the like; the memory 908 such as a tape, a hard disk, and the like. The I/O interface 905 may further include, for example, the communication apparatus 909 of a network interface card such as a LAN card, a modem, etc. The communication apparatus 909 may allow the electronic device 900 to perform wireless or wired communication with other apparatuses to exchange data and perform communication processing via a network such as the Internet. The driver 910 is also connected to the I/O interface 905 as needed. The removable medium 911, such as a magnetic disk, an optical disk, a magneto-optical disk, a semiconductor memory, etc., is installed on the driver 910 as needed so that the computer program read from it can be installed into the memory 908 as needed. Although Fig. 9 shows an electronic device 900 including various apparatuses, it should be understood that not all the apparatuses shown are required to be implemented or included. More or fewer apparatuses may alternatively be implemented or included.

For example, the electronic device 900 may further include a peripheral interface (not shown in the drawings) and the like. The peripheral interface may be various types of interfaces, such as a USB interface, a lightning interface, and the like. The communication apparatus 909 may communicate with networks and other apparatuses via wireless communication, such as the Internet, an intranet and/or a wireless network such as a cellular telephone network, a wireless local area network (LAN), and/or a metropolitan area network (MAN). The wireless communication may use any of a variety of communication standards, protocols, and technologies including, but not limited to, global system for mobile communications (GSM), enhanced data GSM environment (EDGE), wideband code division multiple access (W-CDMA), code division multiple access (CDMA), time division multiple access (TDMA), Bluetooth, Wi-Fi (e.g., based on IEEE 802. 11a, IEEE 802. 11b, IEEE 802. 11g, and/or IEEE 802. 11n standards), voice over internet protocol (VoIP)-based transmission, Wi-MAX, protocols for e-mail, instant messaging, and/or short message service (SMS), or any other suitable communication protocol.

There are also the following points to be made for the present disclosure:
(1) The drawings of the embodiments of the present disclosure relate only to the structures involved with the embodiments of the present disclosure, and other structures can be referred to as the usual designs.
(2) For clarity, in the drawings used to describe the embodiments of the present disclosure, the thicknesses of the layers or regions are enlarged or reduced, i.e., these drawings are not drawn to the actual scale.
(3) Without conflict, the embodiments and features in the embodiments of the present disclosure may be combined with each other to obtain new embodiments.

The above are only specific embodiments of the present disclosure, but the scope of protection of the present disclosure is not limited thereto. The scope of protection of the present disclosure shall be subject to the scope of protection of the stated claims.

## Claims

1. A method for thread scheduling, comprising:
acquiring a plurality of threads to be scheduled for object resources in a processor, and acquiring an occupancy quantity and a reservation quantity of the object resources for the plurality of the threads respectively and currently; and
selecting a target thread satisfying a scheduling condition from the plurality of the threads for scheduling, based on the occupancy quantity and the reservation quantity of the object resources for the plurality of the threads respectively and currently.

2. The method according to claim 1, wherein the scheduling condition comprises that the target thread is currently active, and the object resources have a first quantity of object resources available for allocation except a quantity of object resources reserved for other active threads other than the target thread.

3. The method according to claim 1, wherein the selecting a target thread satisfying a scheduling condition from the plurality of the threads for scheduling, comprises:
arbitrating based on a selection algorithm to select the target thread from one or more candidate threads that satisfy the scheduling condition.

4. The method according to claim 3, wherein the selection algorithm comprises a least recently used (LRU) algorithm, a least frequently used (LFU) algorithm or a Robin Hood (RH) algorithm.

5. The method according to claim 1, wherein the selecting a target thread satisfying a scheduling condition from the plurality of the threads for scheduling, comprises:
acquiring target instructions to be sent by the target thread and a second quantity of the target instructions, and acquiring a first quantity of object resources available for allocation except a quantity of object resources reserved for other active threads other than the target thread, wherein the first quantity is greater than zero; and
in response to the second quantity being less than or equal to the first quantity, sending all of the target instructions to use the object resources for instruction processing, or, in response to the second quantity being greater than the first quantity, sending partial instructions having the first quantity among the target instructions to use the object resources for instruction processing.

6. The method according to claims 1-5, wherein before the acquiring an occupancy quantity and a reservation quantity of the object resources for the plurality of the threads respectively and currently, the method further comprises:
determining the reservation quantity of the object resources for each thread of the plurality of the threads.

7. The method according to claim 6, wherein the determining the reservation quantity of the object resources for each thread of the plurality of the threads, comprises:
for a current thread in the plurality of the threads, determining whether the current thread is active;
in response to the current thread being inactive, reserving no object resource for the current thread, or, in response to the current thread being active, determining a reservation quantity of the object resources for the current thread based on an occupancy quantity of the object resources for the current thread.

8. The method according to claims 1-5, wherein a quantity of the plurality of the threads is greater than or equal to 4.

9. The method according to claims 1-5, wherein the object resources comprise a cache, a storage space of a branch predictor, a storage space of an out-of-order scheduler and a storage space of a data prefetcher.

10. An apparatus for thread scheduling, comprising:
an acquiring module, configured to acquire a plurality of threads to be scheduled for object resources in a processor, and acquire an occupancy quantity and a reservation quantity of the object resources for the plurality of the threads respectively and currently; and
a scheduling module, configured to select a target thread satisfying a scheduling condition from the plurality of the threads for scheduling based on the occupancy quantity and the reservation quantity of the object resources for the plurality of the threads respectively and currently.

11. The apparatus according to claim 10, wherein the scheduling module comprises:
a thread selecting module, configured to arbitrate based on a selection algorithm to select the target thread from one or more candidate threads that satisfy the scheduling condition.

12. The apparatus according to claim 11, wherein the scheduling module further comprises:
an instruction selecting module, and the instruction selecting module is configured to:
acquire target instructions to be sent by the target thread and a second quantity of the target instructions, and acquire a first quantity of object resources available for allocation except a quantity of object resources reserved for other active threads other than the target thread, wherein the first quantity is greater than zero; and
in response to the second quantity being less than or equal to the first quantity, send all of the target instructions to use the object resources for instruction processing, or, in response to the second quantity being greater than the first quantity, send partial instructions having the first quantity among the target instructions to use the object resources for instruction processing.

13. The apparatus according to claim 10, further comprising:
a resource reservation module, configured to determine the reservation quantity of the object resources for each thread of the plurality of the threads.

14. An apparatus for thread scheduling, comprising at least one processor and a memory;
wherein the memory stores computer-readable instructions and is commutatively connected with the at least one processor; and
the at least one processor executes the computer-readable instructions stored by the memory to implement the method for thread scheduling as claimed in any one of claims 1-9.

15. A processor, comprising the apparatus for thread scheduling as claimed in any one of claims 10-14.

16. A computer-readable storage medium, wherein the computer-readable storage medium stores computer-readable instructions, when a processor executes the computer-readable instructions, the processor implements the method for thread scheduling as claimed in any one of claims 1-9.
